# FASCICULE DE BREVET EUROPEEN

(11) **EP 2 503 178 B1**
(45) Date de publication et mention de la délivrance du brevet: **14.05.2014**
(21) Numéro de dépôt: 12160144.7
(22) Date de dépôt: 19.03.2012
(51) Int. Cl.: F16F 9/04, B29D 22/02

(54) **Membrane pour suspension secondaire à air de véhicule terrestre ou ferroviaire, son procédé de fabrication, suspension et véhicule l'incorporant**
Membrane für eine sekundäre Luftfederung eines Fahrzeugs und Methode zur fertigung.
Sleeve for a secondary air suspension of a ground or railway vehicle, its manufacturing process, suspension and vehicle incorporating the same.

(30) Priorité: 24.03.2011 FR 1152452
(43) Date de publication de la demande: 26.09.2012
(73) Titulaire: Hutchinson, 75008 Paris (FR)
(72) Inventeur: Bujeau, Benjamin, 45210 La Selle en Hermois (FR); Zarife, Victor, 45120 Cepoy (FR)
(74) Mandataire: Bolinches, Michel Jean-Marie

(56) Documents cités:
- EP-A1- 1 918 609
- EP-A2- 1 484 525
- DE-A1- 3 937 819
- FR-A- 1 165 361
- FR-A1- 2 896 220
- US-A- 3 666 598
- US-A1- 2004 041 313
- US-A1- 2008 111 288
- US-B1- 6 264 178
- US-B1- 6 786 476

## Description

La présente invention concerne une membrane pour suspension secondaire à air de véhicule terrestre ou ferroviaire, en particulier de type poids-lourd ou wagon de passagers, cette suspension secondaire l'incorporant, un tel véhicule qui en est pourvu, et un procédé de fabrication de cette membrane.

D'une manière générale, une caisse de voiture de passagers pour véhicule ferroviaire est supportée par deux bogies situés respectivement vers les deux extrémités de la caisse. Chaque bogie comprend généralement deux essieux, et chaque bogie est relié d'une part à chaque essieu par un dispositif de suspension primaire à ressorts hélicoïdaux par exemple, et d'autre part à la caisse de la voiture par deux dispositifs de suspension secondaires à air qui sont chacun associés, pour des questions de sécurité, à un dispositif de secours apte à compenser toute fuite d'air dans la suspension secondaire associée et qui pourrait provoquer éventuellement un déraillement du véhicule ferroviaire lancé à grande vitesse.

Le rôle de ces suspensions secondaires à air est essentiellement d'améliorer le confort des passagers, et elles doivent donc présenter une très grande souplesse. Concrètement, une suspension secondaire à air est constituée par une membrane souple et étanche, qui peut se présenter sous la forme d'un pneumatique relié à un réservoir auxiliaire d'air pour augmenter le volume d'air emmagasiné dans la membrane. On peut par exemple citer le document FR-A1-2 896 220 pour la description d'une telle suspension secondaire à air.

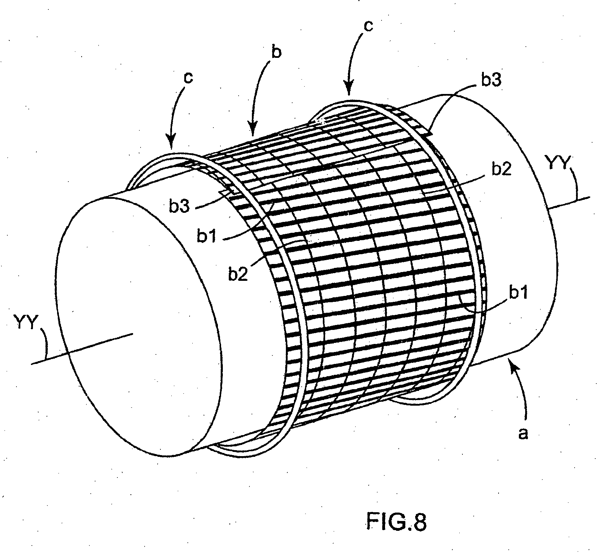

De manière connue, ces membranes de suspension secondaire à air sont renforcées par des nappes de tissus textiles tramés qui sont noyés dans du caoutchouc, comme par exemple décrit dans le document EP-A1-1 918 609 qui mentionne de tels tissu composites textile/ caoutchouc et comme illustré dans la figure 8 annexée à la présente description qui montre une phase de confection sur un mandrin a d'une nappe tramée b d'une telle membrane connue. Comme visible sur cette figure 8 qui montre en outre deux tringles c prévues pour renforcer deux zones d'accroche de la membrane et entre lesquelles est destinée à s'étendre la nappe b, cette dernière comprend des fils de chaîne b1 qui s'étendent sensiblement dans la direction axiale YY du mandrin a et qui sont reliés entre eux par des fils de trame b2 s'étendant sensiblement dans la direction circonférentielle du mandrin a. On voit également à cette figure 8 que la nappe tramée b ainsi confectionnée présente nécessairement une zone globalement axiale de recouvrement b3 (connue sous le nom de « duplicature » par l'homme du métier) définissant deux épaisseurs de cette nappe b en son raccordement autour du mandrin a.

Un inconvénient majeur de ces membranes connues à nappes de tissus tramés réside dans leur résistance mécanique relativement réduite en fonctionnement. En particulier, le doublage de la densité de fils b1, b2 en cette zone b3 constitue un obstacle à l'expansion homogène de la membrane lors du gonflage de l'ébauche de membrane avant vulcanisation, ce qui génère une ligne de faiblesse mécanique de la membrane en utilisation.

Un but de l'invention est de proposer une membrane sensiblement torique pour suspension secondaire à air de véhicule terrestre ou ferroviaire, la membrane comprenant deux zones d'accroche et au moins une couche filaire de fils textiles et/ou métalliques qui est située entre deux couches élastomères radialement interne et externe et qui s'étend entre ces zones d'accroche, qui remédie notamment à cet inconvénient.

A cet effet, une membrane selon l'invention est telle que ladite au moins une couche filaire a son ou chacun de ses fil(s) individuellement gainé(s) par une gaine élastomère compatible avec ces couches interne et externe.

On notera que cette membrane selon l'invention présente une géométrie asymétrique, vue en section axiale (i.e. en section transversale dans un plan perpendiculaire à la direction circonférentielle de la membrane), contrairement aux pneumatiques, avec pour cette membrane un bourrelet circonférentiel qui s'étend de manière asymétrique entre ses deux zones d'accroche en étant incliné axialement vers l'une de ces zones.

Selon une autre caractéristique de l'invention, cette membrane est telle que ladite ou chaque couche filaire est dépourvue de toute discontinuité entre lesdites zones d'accroche, étant en particulier dépourvue de toute zone de recouvrement de cette couche par elle-même s'étendant de l'une des zones d'accroche à l'autre.

On notera que cette absence de discontinuité d'une zone d'accroche à l'autre, telle que la zone de recouvrement ou « duplicature » précitée en relation avec la nappe tramée de l'art antérieur, élimine toute ligne de faiblesse mécanique pour la membrane générée par un défaut d'expansion d'une telle zone lors du gonflage de la membrane, comme expliqué ci-dessus.

Selon un autre aspect de l'invention, ladite ou chaque couche filaire est dépourvue de tout fil de trame, contrairement à ces membranes à nappes tramées de l'art antérieur.

Avantageusement, cette gaine peut être extrudée autour de ce(s) fil(s) et peut présenter une épaisseur comprise entre 0,1 mm et 1 mm.

Selon une autre caractéristique de l'invention, ledit ou chaque fil gainé peut former un enroulement de spires jointives dans ladite au moins une couche filaire. En d'autres termes, dans le cas où la membrane comporte une unique couche filaire, celle-ci peut être à spires jointives et, dans le cas où la membrane comporte plusieurs couches filaires radialement superposées, l'une au moins de ces couches peut être à spires jointives. Toutefois, selon une variante de l'invention, la ou les couche(s) filaire(s) peu(ven)t ne pas être à spires jointives, ce qui signifie qu'il est possible de n'avoir aucune couche filaire à spires jointives dans la membrane.

On notera que cette gaine individuelle de fil qui enrobe les spires dudit ou de chaque fil n'est pas à confondre avec l'enrobage de caoutchouc dans lequel sont noyées les deux faces d'un tissu textile tramé selon l'art antérieur.

On notera également que cette gaine permet, d'une part, d'améliorer le « collant à cru » du fil enroulé lors de la confection de l'ébauche de membrane non réticulée sur un mandrin avec un contrôle amélioré de la trajectoire ou inclinaison de ce fil et, d'autre part, de minimiser la résistance à l'usure en fonctionnement de la membrane réticulée en dépit du caractère de préférence jointif des spires de l'enroulement filaire.

Avantageusement, la membrane peut comprendre plusieurs et de préférence 2n (n entier ≥ 1) dites couches filaires radialement superposées qui comportent chacune un câblé textile gainé formant ledit ou chaque fil et de préférence réalisé au moins en partie en un polyamide tel que l'aramide et/ou en un polyester tel que le PET. Ces couches filaires peuvent être formées par un enroulement continu d'un unique dit câblé textile gainé suivant des angles +α, -α avec l'axe de révolution de la membrane qui s'équilibrent globalement avec un même nombre de spires d'angle +α et d'angle -α, avec α qui est de préférence compris entre 0° et 90°.

On notera qu'il est possible d'utiliser plusieurs matériaux pour le(s) fil(s) gainés de la ou de chaque couche filaire (e.g. plusieurs matériaux textiles au sein d'une même couche filaire, comme par exemple du PET et de l'aramide), laquelle couche filaire est alors de structure hybride.

De plus et optionnellement dans le cas où l'une au moins des couches filaires présente cette structure hybride, il est possible d'utiliser des matériaux de fils différents d'une couche filaire à une autre la surmontant directement ou non.

Encore plus avantageusement, lesdites couches filaires peuvent se recouvrir mutuellement de sorte que le fil gainé de l'une de ces couches recouvre entièrement celui de la couche sous-jacente, ou bien se croiser de sorte que les fils gainés respectifs de ces couches soient entremêlés à intervalles réguliers à la manière d'un tissu.

Selon une autre caractéristique de l'invention, ledit ou chaque fil peut être recouvert d'un activateur d'adhésion à son interface avec ladite gaine qu'il comporte, cet activateur étant de préférence une résine de résorcinol formaldéhyde (« RFL » en abrégé) ou un donneur de méthylol (e.g. hexaméthoxymélamine ou hexaméthylènetétramine).

Avantageusement, ladite gaine peut être constituée d'une composition élastomère réticulée qui est à base d'au moins un caoutchouc ou élastomère thermoplastique (TPE), tout comme les couches interne et externe, mais qui est différente de celle de ces deux couches, cette gaine présentant de préférence une épaisseur comprise entre 0,1 mm et 1 mm.

On notera que cette gaine permet d'améliorer la liaison des deux couches interne et externe entre elles, mais qu'elle ne doit pas être trop épaisse pour ne pas pénaliser la densité de fils souhaitée qui doit être aussi élevée que possible. Cette épaisseur de gaine est choisie en fonction de la nature du fil (notamment de sa résistance mécanique) et de la densité de fils nécessaire au bon renforcement de la membrane.

Egalement avantageusement, lesdites compositions de gaine et de couches interne et externe peuvent être à base d'au moins un élastomère diénique halogéné ou non de préférence choisi dans le groupe constitué par les polychloroprènes (CR), les polybutadiènes (BR), les copolymères styrène-butadiène (SBR), les polyisoprènes (IR), le caoutchouc naturel (NR), les terpolymères éthylène-propylène-diène (EPDM) et leurs mélanges, ces compositions comprenant en outre une charge renforçante de préférence à base de noir de carbone et/ou d'une charge minérale telle qu'un oxyde de silicium. En variante, ces compositions de gaine et de couches interne et externe peuvent être à base d'au moins un vulcanisat thermoplastique (TPV) à titre d'élastomère thermoplastique, étant entendu que d'autres TPE sont utilisables.

Selon une autre caractéristique de l'invention, lesdites zones d'accroche de la membrane peuvent être respectivement renforcées par deux tringles qui peuvent être constituées dudit ou desdits fil(s) prolongeant circonférentiellement ladite au moins une couche filaire, ces tringles pouvant alors être avantageusement constituées du câblé textile précité, étant ainsi non métalliques contrairement aux tringles des membranes à air existantes.

Une suspension secondaire à air de véhicule terrestre ou ferroviaire selon l'invention, le véhicule comportant une caisse supportée par au moins un train de roues, comprend :
- un réservoir auxiliaire d'air monté sous la caisse, et
- une membrane sensiblement torique telle que définie ci-dessus qui est montée sous ce réservoir en communiquant avec lui et qui comporte deux zones d'accroche supérieure et inférieure montées contre deux plaques de support supérieure et inférieure respectivement destinées à être montée sous ce réservoir et sur une suspension de secours solidaire du train de roues.

Un véhicule terrestre ou ferroviaire selon l'invention, en particulier un poids-lourd ou un wagon de passagers, est supporté par au moins un train de roues et est équipé d'au moins une suspension secondaire à air telle que définie ci-dessus.

Un procédé de fabrication selon l'invention d'une membrane telle que celle précitée comprend les étapes suivantes :
a) enroulement autour d'un mandrin de confection dudit au moins un fil, préalablement gainé de préférence par extrusion, radialement à l'extérieur de la couche interne pour former ladite au moins une couche filaire,
b) dépôt de ladite couche externe radialement à l'extérieur de ladite au moins une couche filaire ainsi enroulée pour l'obtention d'une ébauche de membrane réticulable enserrant ce mandrin, et
c) moulage et réticulation sous pression de cette ébauche dans une presse.

On notera que le dépôt des couches interne et externe peut être réalisé sous forme de nappes ou d'un enroulement de bandes extrudées, à titre non limitatif, et qu'il est possible de déposer plusieurs couches internes et/ou externes, en remplacement d'une unique couche interne et/ou externe.

Avantageusement, ledit enroulement de l'étape a) peut être obtenu par un dépôt d'un unique dit fil continu et gainé, déposé sur plusieurs et de préférence 2n (n ≥ 1) dites couches filaires et constitué d'un câblé textile traité par un activateur d'adhésion et gainé par une composition de préférence à base d'un élastomère diénique halogéné ou non, tel que ceux précités.

Selon une autre caractéristique de l'invention, ce procédé peut comprendre à l'étape a) l'enroulement dudit unique fil gainé continu sur lesdites couches filaires suivant des angles +α, -α avec la direction axiale du mandrin et qui s'équilibrent globalement avec un même nombre de spires d'angle +α et -α de préférence compris entre ± 0° et 90°.

Avantageusement, l'on peut mettre en oeuvre l'étape a) en déplaçant ledit mandrin optionnellement en translation et en rotation par rapport à son axe de symétrie pour réaliser ledit enroulement, ce mandrin présentant par exemple deux tronçons d'extrémité axiaux cylindriques reliés entre eux par un tronçon intermédiaire par exemple tronconique, de telle sorte que lesdites zones d'accroche de l'ébauche de membrane soient formées aux extrémités respectives du mandrin.

D'autres avantages et caractéristiques et détails de l'invention ressortiront du complément de description qui va suivre, en référence à des dessins annexés, donnés uniquement à titre d'exemple et dans lesquels :
la figure 1 est une vue en coupe axiale d'un exemple de suspension secondaire à air pour véhicule ferroviaire selon l'invention,
la figure 2 est une vue schématique en section axiale d'un autre exemple de membrane de l'invention utilisable dans la suspension secondaire de la figure 1,
la figure 3 est une vue schématique d'une installation de confection d'une ébauche de membrane selon l'invention,
la figure 4 est une vue en perspective avec arrachement partiel d'un premier exemple de renfort de membrane avec couches superposées de fils gainés se recouvrant entièrement,
la figure 5 est une vue en perspective d'un second exemple de renfort de membrane avec couches superposées de fils gainés qui sont entremêlés entre ces couches à la manière d'un tissu,
la figure 6 est une vue schématique d'un moule de cuisson en position ouverte recevant cette ébauche, montrée en demi-section axiale,
la figure 7 est une vue du moule de la figure 6 en position fermée avec la membrane en cours de cuisson, en demi-section axiale, et
la figure 8 est une vue schématique en perspective d'une membrane selon l'art antérieur de type à nappes tramées en cours de confection sur un mandrin.

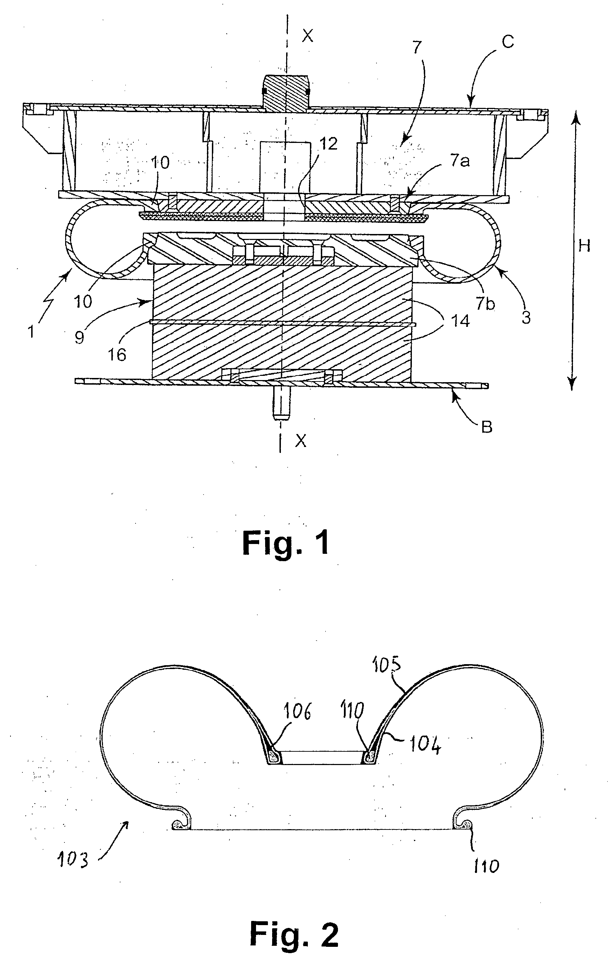

La suspension secondaire à air 1 telle qu'illustrée à la figure 1 est constituée par une membrane 3 souple, déformable et étanche ayant une forme globalement torique d'un pneumatique (i.e. de section axiale sensiblement en forme de « Ω » à l'instar d'un pneumatique, quoique asymétrique contrairement à ce dernier), et par un réservoir auxiliaire d'air 7 mis en communication avec la membrane 3. La suspension secondaire 1 est associée à une suspension de secours 9 apte à compenser toute fuite d'air dans la membrane 3. La suspension secondaire 1 et la suspension de secours 9 sont superposées l'une sur l'autre en étant alignées suivant un axe de révolution X-X sensiblement vertical, et présentent une symétrie de révolution autour de cet axe X-X.

La membrane 3 présente deux zones d'accroche 10 qui, dans l'exemple de la figure 1, ont sensiblement le même diamètre et qui sont respectivement montées sur le pourtour périphérique de deux plaques de support métalliques circulaires supérieure 7a et inférieure 7b situées en regard l'une de l'autre. Le réservoir auxiliaire 7 est fixé au-dessus de la membrane 3 sur la plaque supérieure de support 7a et communique avec l'intérieur de la membrane 3 par un passage 12. La suspension de secours 9 est fixée au-dessous de la membrane 3, et est constituée par deux groupes de ressorts 14 séparés par une plaque métallique 16. Le réservoir auxiliaire 7 et la suspension de secours 9 sont respectivement fixés à la caisse C du véhicule et au bogie B qui supporte ce véhicule.

On notera que l'invention s'applique à des membranes de formes différentes, comme par exemple la membrane 103 de la figure 2 avec des zones d'accroche 110 de diamètres différents, membrane 103 sur laquelle on a identifié les couches radialement interne 104 et externe 105 toutes deux à base d'un élastomère, tel qu'un élastomère diénique (e.g. un CR) ou un TPV. Quant au renfort filaire 106 selon l'invention, il est représenté de manière schématique à la figure 2 (ses couches filaires n'étant pas visibles) et sera décrit en détail ci-dessous.

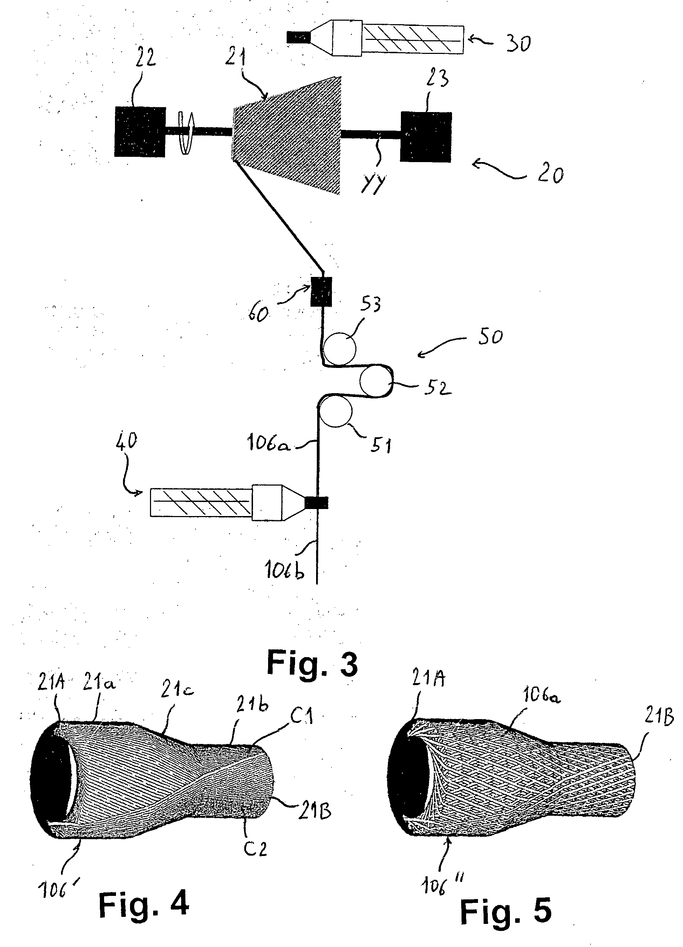

Comme illustré à la figure 3, on peut confectionner une ébauche (non réticulée) de membrane 103 selon l'invention par exemple au moyen d'une installation comprenant :
- un tour de confection 20 comprenant un mandrin de confection 21 par exemple en partie tronconique (sa forme précise est illustrée aux figures 4 et 5), qui est monté mobile optionnellement en translation et en rotation autour de son axe de symétrie YY par des moyens de commande 22, 23 et qui est destiné à recevoir les couches élastomères interne 104 et externe 105 et, radialement entre celles-ci, les couches filaires 106 à base de fil(s) gainé(s) 106a,
- une première extrudeuse 30 de bandes élastomères qui est agencée en relation avec le mandrin 21 de manière à y déposer successivement des enroulements de ces bandes constituant la ou chaque couche interne 104 puis la ou chaque couche externe 105, et
- une seconde extrudeuse 40 de gainage individuel du ou de chaque fil 106b qu'elle reçoit et qui est couplée à un dispositif 50 de mise en tension (via des galets 51, 52, 53) et de dépose du fil gainé 106a, la tension et la dépose sous forme d'enroulement sur le mandrin 21 étant optionnellement pilotées par exemple par un dispositif d'enroulement 60.

On notera que la dépose successive sur le mandrin 21 des enroulements de couches interne 104, filaire 106 à fil(s) gainé(s) 106a et externe 105 peut être réalisée manuellement ou bien de manière au moins en partie automatisée par un tel dispositif d'enroulement.

Comme indiqué précédemment, on utilise de préférence un enroulement continu à spires par exemple jointives d'un unique câblé textile gainé 106a (par exemple en aramide) à titre de fil, qui forme 2n (n entier ≥ 1) couches filaires radialement superposées et déposées suivant des angles +α, -α avec la direction axiale YY qui s'équilibrent globalement avec un même nombre de spires d'angle +α et d'angle -α, avec α compris entre 0° et 90°. Pour réaliser cet enroulement continu, on déplace en même temps le mandrin 21 optionnellement axialement selon l'axe YY et nécessairement en rotation autour de cet axe.

Quant à la gaine de ce câblé textile 106a, elle est par exemple réalisée en un élastomère diénique (e.g. CR) ou en un élastomère thermoplastique (e.g. un TPV) et elle peut par exemple présenter une épaisseur de quelques dixièmes de millimètres (cette épaisseur étant choisie relativement faible pour garantir une densité de fils 106a prédéterminée suffisante pour renforcer la membrane 103, mais pouvant varier en fonction de la résistance mécanique du câblé textile 106b). Pour une bonne adhésion de la gaine au câblé 106b, celui-ci est au préalable traité en surface au moyen d'un activateur d'adhésion par exemple à base d'une résine « RFL » ou d'un donneur de méthylol (e.g. hexaméthoxymélamine ou hexaméthylènetétramine).

L'exemple de la figure 4 montre, sur un mandrin 21 constitué de deux tronçons cylindriques 21a et 21b reliés entre eux par un tronçon tronconique 21c, un renfort de membrane 106' constitué de deux couches filaires C1 et C2 du même câblé textile gainé 106a se recouvrant mutuellement (i.e. « fil à fil ») selon ces angles respectifs +α et -α, et celui de la figure 5 montre sur ce même mandrin 21 un renfort 106" constitué de couches filaires entremêlées à la manière d'un tissage (i.e. à « renforts croisés »). Dans l'un ou l'autre cas et à la fin de l'enroulement du câblé 106a, on peut avantageusement obtenir aux extrémités respectives 21A et 21B du mandrin 21 et par la même opération d'enroulement, les deux tringles destinées à renforcer les deux zones d'accroche 110 de la membrane 103, ces tringles étant ainsi constituées de ce câblé 106a (contrairement aux tringles métalliques usuelles qui sont fabriquées pour les membranes indépendamment des nappes de renforcement).

Comme indiqué ci-dessus, la gaine que comporte le ou chaque câblé 106a permet d'optimiser la direction d'enroulement des spires pour chaque couche filaire C1, C2, de par le caractère collant qu'elle confère à ce câblé 106a. De plus, cette gaine permet d'améliorer la liaison entre les couches élastomère interne 104 et externe 105.

On notera que l'on peut obtenir, par cette technique d'enroulement d'un câblé textile continu 106a préalablement gainé, des couches filaires C1 et C2 agencées mutuellement suivant des motifs tout autres que ceux des figures 4 et 5, pourvu que cet enroulement forme 2n couches filaires C1 et C2 (par exemple deux couches filaires, avec n = 1) à spires jointives ou non.

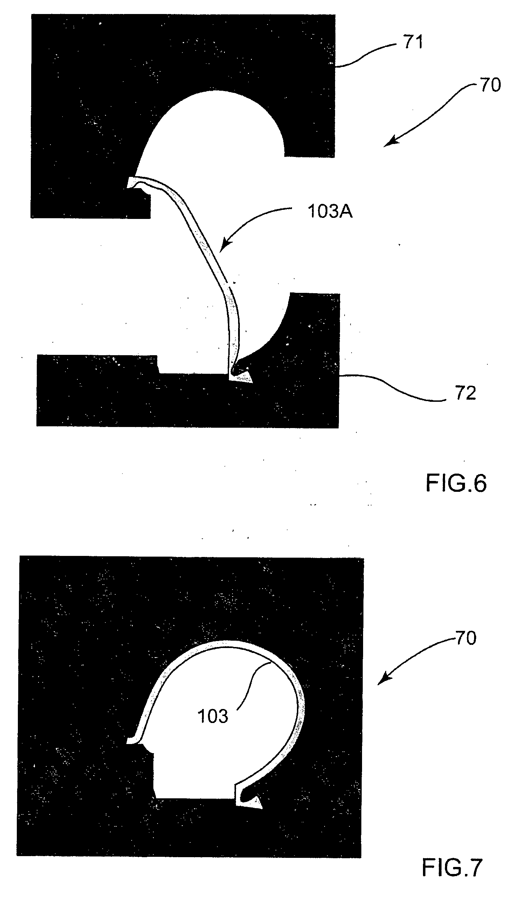

Une fois l'ébauche 103A confectionnée sur ce mandrin 21, on rapproche les tringles d'extrémité l'une de l'autre de manière à former un bourrelet sensiblement torique pour cette membrane 103, puis on introduit l'ébauche 103A repliée ainsi obtenue entre les deux parties 71 et 72 d'un moule définissant une presse de vulcanisation 70 (voir figure 6) pour la réticuler dans des conditions de température et de pression appropriées qui sont celles utilisées dans l'art antérieur pour la vulcanisation sous pression des membranes à air de suspension secondaire. Suite à la fermeture du moule 70 et à la vulcanisation de l'ébauche 103A (voir figure 7), on obtient la membrane 103 telle qu'illustrée à la figure 2.

Comme indiqué précédemment, on notera que le gainage du ou de chaque câblé textile 106b permet de minimiser la résistance à l'usure de la membrane 103 en fonctionnement en dépit du caractère de préférence jointif des spires de chaque couche filaire C1, C2, étant précisé par ailleurs qu'une membrane 103 selon l'invention doit être apte à supporter en utilisation sur un véhicule ferroviaire des pressions de fonctionnement variant typiquement entre 8 et 12 bars.

On notera enfin qu'aucune de ces couches filaires C1 et C2 ne présente avantageusement la moindre discontinuité entre ses deux zones d'accroche 110, telle qu'une zone de recouvrement susceptible de former une ligne de faiblesse mécanique pour la membrane 103 en raison d'une expansion insuffisante en cette ligne lors du gonflement de l'ébauche 103A avant vulcanisation.

## Revendications

1. Membrane (3, 103) sensiblement torique pour suspension secondaire à air (1) de véhicule terrestre ou ferroviaire, la membrane comprenant deux zones d'accroche (10, 110) et au moins une couche filaire (C1, C2, 106) de fils (106b) textiles et/ou métalliques qui est située entre deux couches élastomères radialement interne (104) et externe (105) et qui s'étend entre ces zones d'accroche, **caractérisée en ce que** ladite au moins une couche filaire a son ou chacun de ses fil(s) (106a) individuellement gainé(s) par une gaine élastomère compatible avec lesdites couches interne et externe.

2. Membrane (3, 103) selon la revendication 1, **caractérisée en ce que** ladite ou chaque couche filaire (C1, C2, 106) est dépourvue de toute discontinuité entre lesdites zones d'accroche, étant en particulier dépourvue de toute zone de recouvrement de cette couche par elle-même s'étendant de l'une des zones d'accroche à l'autre.

3. Membrane (3, 103) selon la revendication 1 ou 2, **caractérisée en ce que** ladite ou chaque couche filaire (C1, C2, 106) est dépourvue de tout fil de trame.

4. Membrane (3, 103) selon une des revendications précédentes; **caractérisée en ce que** ladite gaine est extrudée autour de ce(s) fil(s) (106b) et présente de préférence une épaisseur comprise entre 0,1 mm et 1 mm.

5. Membrane (3, 103) selon une des revendications précédentes, **caractérisée en ce qu'**elle comprend plusieurs et de préférence 2n (n entier ≥ 1) dites couches filaires (C1, C2, 106) radialement superposées qui comportent chacune un câblé textile gainé (106a) formant ledit ou chaque fil et de préférence réalisé au moins en partie en un polyamide tel que l'aramide et/ou en un polyester tel que le PET.

6. Membrane (3, 103) selon la revendication 5, **caractérisée en ce que** lesdites couches filaires (C1, C2, 106) sont formées par un enroulement continu d'un unique dit câblé textile gainé (106a) suivant des angles +α, -α avec l'axe de révolution (XX) de la membrane qui s'équilibrent globalement avec un même nombre de spires d'angle +α et d'angle -α, avec α qui est de préférence compris entre 0° et 90°.

7. Membrane (3, 103) selon la revendication 6, **caractérisée en ce que** lesdites couches filaires (C1, C2) se recouvrent mutuellement de sorte que le fil gainé (106a) de l'une de ces couches (C2) recouvre entièrement celui de la couche sous-jacente (C1), ou bien se croisent de sorte que les fils gainés (106a) respectifs de ces couches soient entremêlés à intervalles réguliers à la manière d'un tissu.

8. Membrane (3, 103) selon la revendication 6 ou 7, **caractérisée en ce que** ledit ou chaque fil (106b) est recouvert d'un activateur d'adhésion à son interface avec ladite gaine qu'il comporte, cet activateur étant de préférence une résine de résorcinol formaldéhyde ou un donneur de méthylol.

9. Membrane (3, 103) selon une des revendications précédentes, **caractérisée en ce que** ladite gaine est constituée d'une composition élastomère réticulée qui est à base d'au moins un caoutchouc ou élastomère thermoplastique et qui est différente de celle desdites couches interne (104) et externe (105) également à base d'au moins un caoutchouc ou élastomère thermoplastique, et de préférence **en ce que** lesdites compositions de gaine et de couches interne (104) et externe (105) sont à base d'au moins un élastomère diénique halogéné ou non choisi dans le groupe constitué par les polychloroprènes (CR), les polybutadiènes (BR), les copolymères styrène-butadiène (SBR), les polyisoprènes (IR), le caoutchouc naturel (NR), les terpolymères éthylène-propylène-diène (EPDM) et leurs mélanges, ces compositions comprenant en outre une charge renforçante de préférence à base de noir de carbone et/ou d'une charge minérale telle qu'un oxyde de silicium.

10. Membrane (3, 103) selon une des revendications précédentes, **caractérisée en ce que** lesdites zones d'accroche (10, 110) sont respectivement renforcées par deux tringles qui sont constituées dudit ou desdits fil(s) (106a) prolongeant circonférentiellement ladite au moins une couche filaire (C1, C2, 106), ces tringles étant de préférence constituées d'un câblé textile formant ce(s) fil(s).

11. Suspension secondaire à air (1) de véhicule terrestre ou ferroviaire, le véhicule comportant une caisse (C) supportée par au moins un train de roues (B), la suspension secondaire comprenant:
- un réservoir auxiliaire d'air (7) monté sous la caisse, et
- une membrane (3, 103) sensiblement torique qui est montée sous ce réservoir en communiquant avec lui et qui comporte deux zones d'accroche (10, 110) supérieure et inférieure montées contre deux plaques de support supérieure (7a) et inférieure (7b) respectivement destinées à être montées sous ce réservoir et sur une suspension de secours (9) solidaire du train de roues,
**caractérisée en ce que** ladite membrane est telle que définie à l'une des revendications précédentes.

12. Véhicule terrestre ou ferroviaire, en particulier un poids-lourd ou un wagon de passagers, supporté par au moins un train de roues (B) et équipé d'au moins une suspension secondaire à air (1), **caractérisé en ce que** ladite suspension est telle que définie à la revendication 11.

13. Procédé de fabrication d'une membrane (3, 103) selon une des revendications 1 à 10, **caractérisé en ce qu'**il comprend les étapes suivantes :
a) enroulement autour d'un mandrin de confection (21) dudit au moins un fil (106a), préalablement gainé de préférence par extrusion, radialement à l'extérieur de ladite couche interne (104) pour former ladite au moins une couche filaire (C1, C2, 106),
b) dépôt de ladite couche externe (105) radialement à l'extérieur de ladite au moins une couche filaire ainsi enroulée pour l'obtention d'une ébauche (103A) de membrane (3, 103) réticulable enserrant ce mandrin, et
c) moulage et réticulation sous pression de cette ébauche dans une presse (70).

14. Procédé de fabrication selon la revendication 13, **caractérisé en ce que** ledit enroulement de l'étape a) est obtenu par un dépôt d'un unique dit fil continu et gainé (106a), déposé sur plusieurs et de préférence 2n (n ≥ 1) dites couches filaires (C1, C2, 106) et constitué d'un câblé textile (106b) traité par un activateur d'adhésion et gainé par une composition de préférence à base d'un élastomère diénique halogéné ou non, et de préférence **en ce qu'**il comprend à l'étape a) l'enroulement dudit unique fil gainé continu (106a) sur lesdites couches filaires (C1, C2, 106) suivant des angles +α, -α avec la direction axiale (YY) dudit mandrin qui s'équilibrent globalement avec un même nombre de spires d'angle +α et d'angle -α de préférence compris entre ± 0° et 90°.

15. Procédé de fabrication selon la revendication 13 ou 14, **caractérisé en ce que** l'on met en oeuvre l'étape a) en déplaçant ledit mandrin (21) optionnellement en translation et en rotation par rapport à son axe de symétrie (YY) pour réaliser ledit enroulement, ce mandrin présentant de préférence deux tronçons d'extrémité axiaux cylindriques (21a et 21b) reliés entre eux par un tronçon intermédiaire par exemple tronconique (21c), de telle sorte que lesdites zones d'accroche (10, 110) de l'ébauche (103A) de membrane (103) soient formées aux extrémités respectives (21A et 21 B) du mandrin.

## Patentansprüche

1. Im Wesentlichen torische Membran (3, 103) für eine sekundäre Luftfederung (1) eines Land- oder Schienenfahrzeugs, wobei die Membran zwei Befestigungszonen (10, 110) und wenigstens eine Faserschicht (C1, C2, 106) aus textilen und/oder metallischen Fasern (106b) umfasst, welche sich zwischen zwei elastomeren Schichten radial intern (104) und extern (105) befindet und welche sich zwischen den Befestigungszonen erstreckt, **dadurch gekennzeichnet, dass** die wenigstens eine Faserschicht ihre Faser oder jede ihrer Fasern (106a) individuell umhüllt hat durch eine elastomere Hülle, welche mit der internen und externen Schicht kompatibel ist.

2. Membran (3, 103) nach Anspruch 1, **dadurch gekennzeichnet, dass** die oder jede Faserschicht (C1, C2, 106) ohne jegliche Diskontinuität zwischen den Befestigungszonen ist, wobei sie insbesondere ohne jegliche sich von einer der Befestigungszonen zu der anderen erstreckende Überdeckungszone dieser Schicht durch sich selbst ist.

3. Membran (3, 103) nach Anspruch 1 oder 2, **dadurch gekennzeichnet, dass** die oder jede Faserschicht (C1, C2, 106) ohne jegliche Schussfaser ist.

4. Membran (3, 103) nach einem der vorhergehenden Ansprüche, **dadurch gekennzeichnet, dass** die Hülle um die Faser(n) (106b) extrudiert ist und bevorzugt eine Stärke aufweist, welche zwischen 0,1 mm und 1 mm enthalten ist.

5. Membran (3, 103) nach einem der vorhergehenden Ansprüche, **dadurch gekennzeichnet, dass** sie mehrere und bevorzugt 2n (n ganzzahlig ≥ 1) radial überlagerte genannte Faserschichten (C1, C2, 106) umfasst, welche jeweils ein umhülltes gedrehtes Textil (106a) umfassen, welches die oder jede Faser bildet und bevorzugt wenigstens teilweise aus einem Polyamid, wie z.B. Aramid, und/oder aus einem Polyester, wie z.B. PET, realisiert ist.

6. Membran (3, 103) nach Anspruch 5, **dadurch gekennzeichnet, dass** die Faserschichten (C1, C2, 106) gebildet sind durch ein kontinuierliches Aufrollen eines einzigen von dem umhüllten gedrehten Textil (106a) gemäß Winkeln +α, -α mit der Rotationsachse (XX) der Membran, welche sich global mit einer selben Zahl von Windungen mit Winkel +α und Winkel -α verteilen, wobei α bevorzugt zwischen 0° und 90° enthalten ist.

7. Membran (3, 103) nach Anspruch 6, **dadurch gekennzeichnet, dass** die Faserschichten (C1, C2) sich gegenseitig derart überdecken, dass die umhüllte Faser (106a) der einen dieser Schichten (C2) vollständig diejenige der darunterliegenden (C1) überdeckt, oder sich derart überkreuzen, dass die jeweiligen umhüllten Fasern (106a) dieser Schichten in regelmäßigen Intervallen nach Art eines Gewebes vermengt sind.

8. Membran (3, 103) nach Anspruch 6 oder 7, **dadurch gekennzeichnet, dass** die oder jede Faser (106b) an ihrer Grenzfläche mit der sie enthaltenden Hülle mit einem Haftaktivator bedeckt ist, wobei dieser Aktivator bevorzugt ein Resorcin-Formaldehyd-Harz oder ein Methyldonator ist.

9. Membran (3, 103) nach einem der vorhergehenden Ansprüche, **dadurch gekennzeichnet, dass** die Hülle gebildet ist aus einer netzartigen elastomeren Zusammensetzung, welche auf Basis wenigstens eines Kautschuks oder thermoplastischen Elastomers ist und welche von derjenigen der internen (104) und externen (105) Schicht, ebenfalls auf Basis wenigstens eines Kautschuks oder thermoplastischen Elastomers, verschieden ist, und bevorzugt, dass die Zusammensetzungen der Hülle und der internen (104) und externen (105) Schicht auf Basis wenigstens eines dienischen Elastomers, halogeniert oder nicht, sind, welcher ausgewählt ist aus der Gruppe, die gebildet ist durch Polychloroprene (CR), Polybutadiene (BR), Styrol-Butadien-Copolymere (SBR), Polyisoprene (IR), Naturkautschuk (NR), Ethylen-Propylen-Dien-Terpolymere (EPDM) und ihre Mischungen, wobei diese Zusammensetzungen außerdem einen Verstärkungsfüllstoff, bevorzugt auf Basis von Ruß und/oder einen mineralischen Füllstoff, wie z.B. ein Siliziumoxid, umfassen.

10. Membran (3, 103) nach einem der vorhergehenden Ansprüche, **dadurch gekennzeichnet, dass** die Befestigungszonen (10, 110) jeweils verstärkt sind durch zwei Leisten, welche gebildet sind durch die Faser(n) (106a), welche am Umfang die wenigstens eine Faserschicht (C1, C2, 106) verlängern, wobei diese Leisten bevorzugt gebildet sind aus einem diese Faser(n) bildenden gedrehten Textil.

11. Sekundäre Luftfederung (1) für ein Land- oder Schienenfahrzeug, wobei das Fahrzeug eine Karosserie (C) umfasst, welche von wenigstens einem Räderwerk (B) getragen ist, wobei die sekundäre Federung umfasst:
- ein Hilfsluftreservoir (7), welches unter der Karosserie angebracht ist, und
- eine im Wesentlichen torische Membran (3, 103), welche unter diesem Reservoir angebracht ist und mit diesem kommuniziert, und welche zwei, obere und untere, Befestigungszonen (10, 110) umfasst, welche an zwei, obere (7a) und untere (7b), Halteplatten angebracht sind, welche dazu bestimmt sind, unter diesem Reservoir bzw. über einer an dem Räderwerk befestigten Hilfsaufhängung (9) angebracht zu werden,
**dadurch gekennzeichnet, dass** die Membran derartig ist wie in einem der vorhergehenden Ansprüche definiert.

12. Land- oder Schienenfahrzeug, insbesondere ein Lastkraftwagen oder ein Passagierwaggon, getragen von wenigstens einem Räderwerk (B) und ausgestattet mit wenigstens einer sekundären Luftfederung (1), **dadurch gekennzeichnet, dass** die Federung derartig ist wie in Anspruch 11 definiert.

13. Verfahren zur Herstellung einer Membran (3, 103) nach einem der Ansprüche 1-10, **dadurch gekennzeichnet, dass** es die folgenden Schritte umfasst:
a) Aufrollen, um einen Konfektionsdorn (21), der wenigstens einen Faser (106a), welche vorab bevorzugt durch Extrusion umhüllt wurde, radial auf der Außenseite der internen Schicht (104), um die wenigstens eine Faserschicht (C1, C2, 106) auszubilden,
b) Aufbringen der externen Schicht (105) radial auf der Außenseite der wenigstens einen so aufgerollten Faserschicht, zum Erhalten eines vernetzbaren Rohlings (103a) der Membran (3, 103), welcher den Dorn einschließt, und
c) Formung und Vernetzung unter Druck dieses Rohlings in einer Presse (70).

14. Herstellungsverfahren nach Anspruch 13, **dadurch gekennzeichnet, dass** das Aufrollen von Schritt a) erreicht wird durch Aufbringen einer durchgängigen und umhüllten einzigen genannten Faser (106a), welche auf mehreren und bevorzugt 2n (n ≥ 1) genannten Faserschichten (C1, C2, 106) aufgebracht wird und ein gedrehtes Textil (106b) bildet, welches mit einem Haftaktivator behandelt ist und mit einer Zusammensetzung umhüllt ist, welche bevorzugt auf Basis eines dienischen Elastomers, halogeniert oder nicht, ist, und bevorzugt, dass es bei dem Schritt a) das Aufrollen der einzigen durchgängigen umhüllten Faser (106a) auf den Faserschichten (C1, C2, 106) gemäß Winkeln +α, -α mit der axialen Richtung (YY) des Dorns, welche sich global verteilen mit einer gleichen Anzahl von Windungen mit Winkel +α und Winkel -α, welcher bevorzugt zwischen ± 0° und 90° enthalten ist, umfasst.

15. Herstellungsverfahren nach Anspruch 13 oder 14, **dadurch gekennzeichnet, dass** es den Schritt a) umsetzt, indem der Dorn (21) optional in Translation und in Rotation bezüglich seiner Symmetrieachse (YY) bewegt wird, um das Aufrollen zu realisieren, wobei dieser Dorn bevorzugt zwei zylindrische axiale Endabschnitte (21a und 21b) umfasst, welche miteinander über einen beispielsweise kegelstumpfförmigen Zwischenabschnitt (21c) verbunden sind, sodass die Befestigungszonen (10, 110) des Rohlings (103a) der Membran (103) an den entsprechenden Enden (21A und 21B) des Dorns ausgebildet werden.

## Claims

1. Substantially toroidal membrane (3, 103) for secondary air suspension (1) of a land or rail vehicle, the membrane comprising two attachment areas (10, 110) and at least one corded layer (C1, C2, 106) of fabric and/or metallic threads (106b) which is situated between two radially internal (104) and external (105) elastomer layers and which extends between these attachment areas, **characterized in that** said at least one corded layer has its or each of its thread(s) (106a) individually sheathed by an elastomer sheath compatible with said internal and external layers.

2. Membrane (3, 103) according to Claim 1, **characterized in that** said or each corded layer (C1, C2, 106) has no discontinuity between said attachment areas, in particular having no area of overlap of this layer by itself extending from one of the attachment areas to the other.

3. Membrane (3, 103) according to Claim 1 or 2, **characterized in that** said or each corded layer (C1, C2, 106) has no weft thread.

4. Membrane (3, 103) according to one of the preceding claims, **characterized in that** said sheath is extruded around this/these thread(s) (106b) and preferably has a thickness of between 0.1 mm and 1 mm.

5. Membrane (3, 103) according to one of the preceding claims, **characterized in that** it comprises a number, and preferably 2n (n being an integer ≥ 1) said corded layers (C1, C2, 106) radially superposed, each of which comprises a sheathed textile cord (106a) forming said or each thread and preferably at least partly made of a polyamide such as aramid and/or of a polyester such as PET.

6. Membrane (3, 103) according to Claim 5, **characterized in that** said corded layers (C1, C2, 106) are formed by a continuous winding of a single said sheathed textile cord (106a) according to angles +α, -α with the axis of revolution (XX) of the membrane which balance out overall with one and the same number of turns of angle +α and of angle -α, with α preferably being between 0° and 90°.

7. Membrane (3, 103) according to Claim 6, **characterized in that** said corded layers (C1, C2) mutually overlap so that the sheathed thread (106a) of one of these layers (C2) entirely covers that of the underlying layer (C1), or else cross so that the respective sheathed threads (106a) of these layers are interlaced at regular intervals in the manner of a woven fabric.

8. Membrane (3, 103) according to Claim 6 or 7, **characterized in that** said or each thread (106b) is covered by an adhesion activator at its interface with said sheath that it includes, this activator preferably being a resorcinol formaldehyde resin or a methylol donor.

9. Membrane (3, 103) according to one of the preceding claims, **characterized in that** said sheath consists of a cross-linked elastomer composition which is based on at least one rubber or thermoplastic elastomer and which is different from that of said internal (104) and external (105) layers also based on at least one rubber or thermoplastic elastomer, and preferably in that said compositions of sheath and of internal (104) and external (105) layers are based on at least one halogenated or non-halogenated dienic elastomer chosen from the group consisting of polychloroprenes (CR), polybutadienes (BR), styrene-butadiene copolymers (SBR), polyisoprenes (IR), natural rubber (NR), ethylene-propylene-diene terpolymers (EPDM) and their mixtures, these compositions also comprising a reinforcing filler preferably based on carbon black and/or a mineral filler such as a silicon oxide.

10. Membrane (3, 103) according to one of the preceding claims, **characterized in that** said attachment areas (10, 110) are respectively reinforced by two rods which consist of said thread(s) (106a) circumferentially in extension of said at least one corded layer (C1, C2, 106), these rods preferably consisting of a textile cord forming this/these thread(s).

11. Secondary air suspension (1) of a land or rail vehicle, the vehicle comprising a body (C) supported by at least one wheel train (B), the secondary suspension comprising:
- an auxiliary air tank (7) mounted under the body, and
- a substantially toroidal membrane (3, 103) which is mounted under this tank by communicating with it and which comprises two upper and lower attachment areas (10, 110) mounted against two upper (7a) and lower (7b) support plates respectively intended to be mounted under this tank and on an emergency suspension (9) attached to the wheel train,
**characterized in that** said membrane is as defined in one of the preceding claims.

12. Land or rail vehicle, in particular a heavy truck or a passenger wagon, supported by at least one wheel train (B) and equipped with at least one secondary air suspension (1), **characterized in that** said suspension is as defined in Claim 11.

13. Method for manufacturing a membrane (3, 103) according to one of Claims 1 to 10, **characterized in that** it comprises the following steps:
a) winding around a forming mandrel (21) of said at least one thread (106a), previously sheathed, preferably by extrusion, radially on the outside of said internal layer (104) to form said at least one corded layer (C1, C2, 106),
b) deposition of said external layer (105) radially on the outside of said at least one thus wound corded layer to obtain a preform (103A) of a cross-linkable membrane (3, 103) gripping this mandrel, and
c) molding and cross-linking under pressure of this preform in a press (70).

14. Manufacturing method according to Claim 13, **characterized in that** said winding of the step a) is obtained by a deposition of a single said continuous and sheathed thread (106a), deposited over several, and preferably 2n (n ≥ 1) said corded layers (C1, C2, 106) and consisting of a textile cord (106b) treated by an adhesion activator and sheathed by a composition preferably based on a halogenated or non-halogenated dienic elastomer, and preferably **in that** it comprises, in the step a), the winding of said single continuous sheathed thread (106a) on said corded layers (C1, C2, 106) according to angles +α, -α with the axial direction (YY) of said mandrel which balance out overall with one and the same number of turns of angle +α and of angle -α preferably between ± 0° and 90°.

15. Manufacturing method according to one of Claims 13 or 14, **characterized in that** the step a) is implemented by displacing said mandrel (21) optionally in translation and rotation relative to its axis of symmetry (YY) to produce said winding, this mandrel preferably having two cylindrical axial end sections (21 a and 21 b) linked together by an intermediate section that is, for example, tapered (21 c), such that said attachment areas (10, 110) of the preform (103A) of the membrane (103) are formed at the respective ends (21 A and 21 B) of the mandrel.
